# DEMANDE DE BREVET EUROPEEN

(11) **EP 0 930 117 A1**
(43) Date de publication de la demande: **21.07.1999**
(21) Numéro de dépôt: 97122753.3
(22) Date de dépôt: 23.12.1997
(51) Int. Cl.: B23B 1/00, B23B 13/10

(54) **Embarreur comportant un magasin d'alimentation par gravité**

(71) Demandeur: VN SA, 2740 Moutier (CH)
(72) Inventeur: von Niederhäusern, Francis, 2740 Moutier (CH); Cong, Lin, 2740 Moutier (CH)
(74) Mandataire: Patry, Didier Marcel Pierre

(57) **Abrégé**

L'embarreur selon l'invention comporte un guide avant (4) s'étendant à travers plusieurs stations (7) et pourvu d'un canal de guidage (5) pour une barre à usiner, un magasin d'alimentation (30) pour une réserve de barres (2), et des moyens de chargement pour amener une barre en attente (2a) du magasin au canal de guidage d'une manière simple et sûre, en évitant de causer de l'usure et du bruit. Ces moyens de chargement comportent, dans chaque station, un poussoir sélecteur montant (42) situé au-dessous de la barre en attente (2a) et fixé au levier (20) qui soulève la partie supérieure (16) du guide. Ainsi, quand les moyens de commande (12) de l'embarreur ouvrent le guide, les poussoirs (42) soulèvent la barre en attente et retiennent les autres barres dans le magasin. Un tel embarreur est utilisable notamment pour alimenter un tour automatique.

## Description

La présente invention concerne un embarreur pour alimenter une machine-outil en barres de matière à usiner, l'embarreur comportant :
- un guide ouvrant pourvu d'un canal de guidage dans lequel une barre à usiner peut avancer en direction de la machine-outil,
- un magasin d'alimentation par gravité, disposé latéralement par rapport au guide et agencé pour contenir une réserve de barres dont l'une est une barre en attente retenue par au moins un arrêt à proximité du guide,
- des moyens de chargement agencés pour amener la barre en attente du magasin au canal de guidage en retenant les autres barres en réserve dans le magasin,
- et des moyens de commande agencés pour actionner le guide et les moyens de chargement.

Un embarreur, appelé aussi ravitailleur, est un appareil destiné à fournir de la matière en barre relativement longue à une machine-outil qui va usiner une série de pièces successives à l'extrémité avant de cette barre.

L'invention s'applique particulièrement, mais pas exclusivement, à un embarreur qui alimente un tour automatique, c'est-à-dire que la barre tourne dans le guide de l'embarreur pendant l'usinage. Un embarreur de ce genre fait notamment l'objet de la demande non publiée EP 97112336.9 du même demandeur, à laquelle le lecteur pourra se référer pour plus de détails. Toutefois la présente invention peut aussi s'appliquer à des embarreurs dans lesquels la barre à usiner ne tourne pas.

Pour faire avancer la barre le long du guide, il existe deux types principaux de dispositifs d'avance, comportant tous deux un organe appelé poussette qui se fixe à l'extrémité arrière de la barre. Dans le premier type, la poussette est poussée par une tige ou un câble relativement rigide inséré dans le guide par l'arrière. Dans le second type, la poussette est pourvue d'une plaque latérale appelée drapeau, qui passe entre une partie supérieure et une partie inférieure du guide et qui est rattachée à un organe d'entraînement tel qu'une chaîne ou un câble circulant à côté du guide. Le guide ouvrant est généralement subdivisé en plusieurs sections consécutives supportées dans plusieurs stations. Ces sections s'ouvrent individuellement pour laisser passer le drapeau, et toutes ensemble pour laisser entrer une nouvelle barre dans le guide lorsque la barre précédente a été consommée. La présente invention est utilisable avec ces deux types de dispositifs d'avance.

Dans l'état de la technique, le brevet CH 543 917 décrit un embarreur du genre indiqué en préambule, comportant un dispositif d'avance du deuxième type. Le magasin comporte des rails transversaux inclinés sur lesquels les barres juxtaposées roulent en direction du guide. La première barre, c'est-à-dire la barre en attente, est en butée contre la partie supérieure mobile du guide. Le guide s'ouvre par coulissement de cette partie supérieure vers le haut. La barre en attente n'est alors plus retenue et tombe dans le canal de guidage, tandis que la deuxième barre est retenue à la sortie du magasin par un bec d'un levier sélecteur de chaque station, ce bec s'engageant entre la première et la deuxième barre avant que la première puisse entrer dans le guide. La commande du levier sélecteur s'effectue au moyen d'une came solidaire de la partie supérieure du guide.

Ce système de sélection et de chargement des barres présente divers inconvénients. D'une part, il exige une commande spéciale du levier pivotant dans chaque station. D'autre part, l'engagement du bec entre les barres tend à repousser en arrière la deuxième barre, ce qui cause de l'usure et du bruit et peut même détériorer les barres de section relativement faible. Un tel bec ne peut pas s'engager entre des barres à section non circulaire, par exemple carrées ou hexagonales. En outre, ce système exige un réglage difficile de la position du bec et de sa course, donc aussi du mécanisme de commande, lorsqu'on va usiner des barres d'un autre diamètre.

La présente invention vise à éviter ces inconvénients en créant des moyens de chargement qui présentent une construction simple et un fonctionnement sûr et causant peu d'usure, et qui peuvent être commandés d'une façon extrêmement simple. De préférence, l'embarreur doit pouvoir fonctionner avec des barres de section circulaire ou non circulaire.

A cet effet, l'invention concerne un embarreur du genre défini en préambule, caractérisé en ce que les moyens de chargement comportent une rangée de poussoirs sélecteurs montants disposés entre le magasin et le guide et actionnés par les moyens de commande, chacun de ces poussoirs ayant une face supérieure disposée au-dessous de la barre en attente et agencée pour soulever celle-ci pour la faire passer par-dessus l'arrêt lorsque les poussoirs sont actionnés.

Ainsi, au moment où chaque poussoir sélecteur soulève la barre en attente pour l'amener au guide, il se met à la place de celle-ci dans le magasin et retient donc automatiquement la deuxième barre et les suivantes comme le faisait la barre en attente. Il suffit de donner au poussoir une forme et une position appropriée pour que ces fonctions s'effectuent sans produire sur les barres en réserve des efforts ou des mouvements qui pourraient causer de l'usure ou du bruit.

De préférence, le guide comprend une partie inférieure et une partie supérieure mobile entre lesquelles est ménagé le canal de guidage, la partie supérieure étant liée à des bras supérieurs actionnés par les moyens de commande pour ouvrir le guide. Chaque poussoir sélecteur peut alors être solidaire d'un des bras supérieurs, de sorte qu'il se déplace conjointement avec la partie supérieure du guide et n'a donc pas besoin de mécanisme de commande particulier. S'il l'on veut changer de diamètre de barres, on peut aisément régler la position de chaque poussoir sélecteur en ajustant sa fixation par rapport au bras supérieur.

D'autres caractéristiques et avantages de l'invention apparaîtront dans la description suivante d'un mode de réalisation préféré, présenté à titre d'exemple non limitatif en référence aux dessins annexés, dans lesquels :
- la figure 1 est une vue générale schématique en élévation latérale d'un embarreur selon l'invention comportant plusieurs stations intermédiaires pour supporter le guide ouvrant,
- la figure 2 est une vue en coupe transversale de l'embarreur à proximité d'une station intermédiaire, et
- la figure 3 représente l'objet de la figure 2, vu de dessus suivant la flèche III et partiellement en coupe.

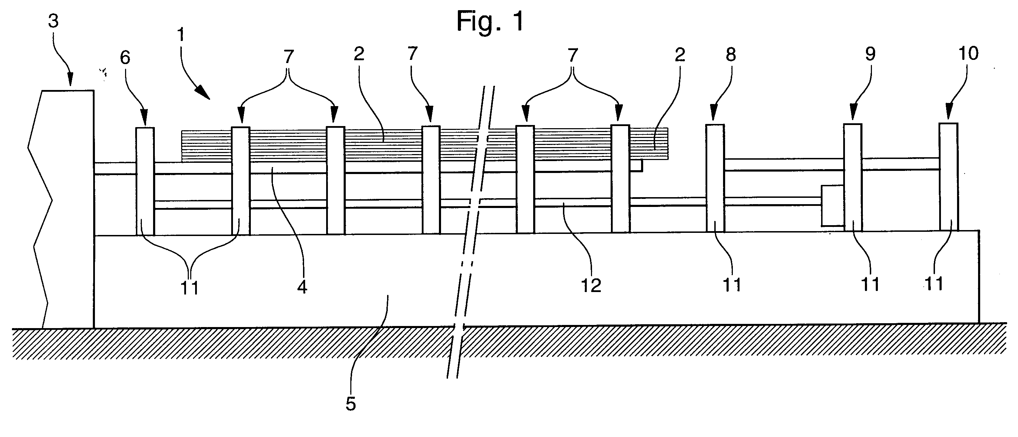

En référence à la figure 1, l'embarreur 1 est destiné à introduire longitudinalement de la matière en barres 2 dans la poupée d'une machine outils, en l'occurrence un tour automatique 3. La barre 2 en cours de travail est logée dans un guide ouvrant 4 formant un canal de guidage dans lequel elle peut tourner à grande vitesse. Le guide 4 est subdivisé en plusieurs sections qui peuvent s'ouvrir séparément en fonction de l'avance de la barre, et toutes ensemble pour recevoir une nouvelle barre provenant d'un magasin latéral qui sera décrit plus loin.

L'embarreur 1 comporte un bâti général 5 supportant une station avant 6, une série de stations intermédiaires 7 et trois stations arrières 8, 9 et 10, chacune des stations 6 à 10 ayant un support transversal 11 monté sur le bâti 5. Les stations intermédiaires portent le guide 4 et le magasin latéral. Un arbre à cames longitudinal 12 est monté parallèlement au guide 4 sur les supports 11 des stations 6 à 8. Cet arbre commande l'ensemble des mécanismes de l'embarreur à l'exception du dispositif d'avance de barre, qui n'est pas représenté dans la figure 1. Les moyens de commande de ce dispositif et de l'arbre à cames se trouvent dans les stations 8 à 10. Pour plus de détails à ce sujet, on se référera à la demande EP 97112336.9 mentionnée plus haut. Dans le cas présent, l'arbre à came 12 est rotatif, mais il est aussi possible d'utiliser un arbre à came linéaire, c'est-à-dire se déplaçant longitudinalement.

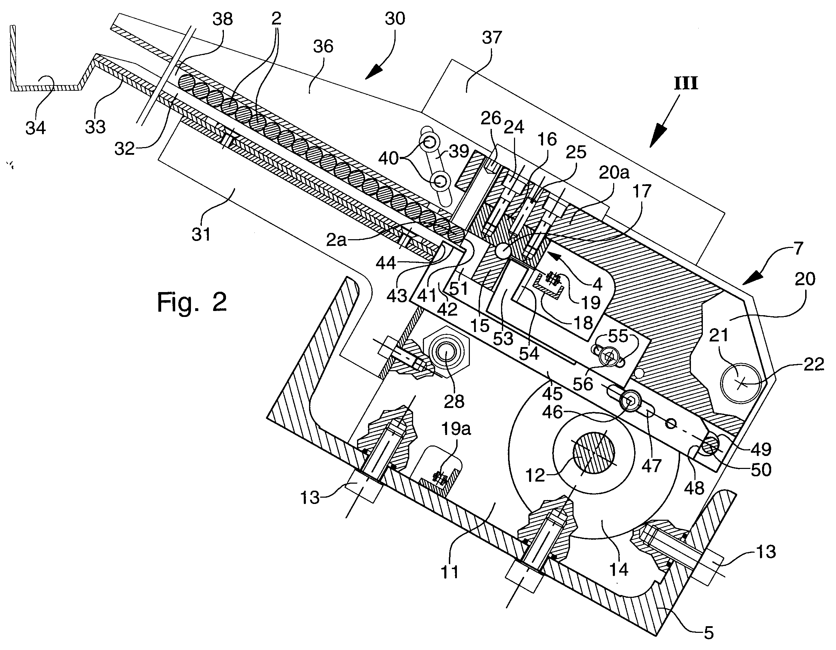

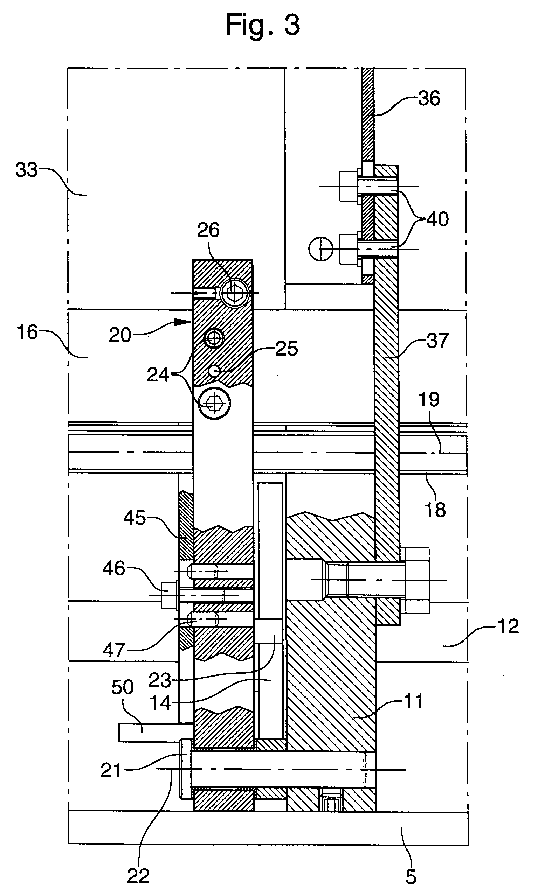

Les figures 2 et 3 représentent les principales particularités d'une station intermédiaire 7 en relation avec la présente invention. Le bâti 5 de l'embarreur est formé ici par un profilé en U sur lequel le support 11 de chaque station 7 est fixé par des vis 13. L'arbre à cames rotatif 12 est supporté par le support 11 et porte, à côté de celui-ci, une came en forme de disque 14 qui commande l'ouverture du guide ouvrant 4. Celui-ci comprend une partie inférieure fixe 15 et une partie supérieure mobile 16 entre lesquelles un canal de guidage circulaire 17, destiné à recevoir la barre à usiner, est formé par des évidements à section semi-circulaire dans les deux parties du guide. A côté du guide 4 se trouve une rigole 18 sur laquelle passe le brin supérieur 19 d'une chaîne sans fin du dispositif d'avance de barre, tandis que le brin de retour 19a de la chaîne passe le long du bâti 5. Comme on l'a expliqué plus haut, ce dispositif comprend une poussette qui circule dans le canal de guidage 17 et qui est rattachée au brin 19 de la chaîne par un drapeau passant entre les deux parties 15 et 16 du guide 4.

Dans chaque station 7, un levier pivotant 20 est monté sur le support 11, grâce à une tige 21 définissant un axe de pivotement 22 parallèle au guide 4. Le levier 20 est pourvu d'un suiveur 23 que la came 14 attaque pour soulever le levier 20 dans la mesure voulue pour produire une ouverture plus ou moins grande du guide . Le levier 20 comporte un bras supérieur 20a qui passe au-dessus de la chaîne 19. La partie supérieure 16 du guide est fixée à l'avant du bras 20a au moyen de vis 24 et d'une tige de positionnement 25. En fait, cette partie 16 est portée par les leviers basculants 20 de deux stations 7 consécutives. L'extrémité avant du bras 20a comporte en outre une vis de retenue 26 dont le rôle sera expliqué plus loin.

La partie inférieure 15 du guide 4 est fixée aux supports 11 de deux ou plusieurs stations 7 d'une manière qui n'est pas représentée en détail. Elle contient en outre des conduits de lubrification qui ne sont pas représentés et qui débouchent dans le canal de guidage 17, pour y introduire de l'huile provenant d'une conduite d'alimentation 28.

Le magasin 30 contenant la réserve de barres 2 comporte dans chaque station 7 une console inférieure 31 fixée au support 11 de la station, cette console étant surmontée d'un rail inférieur 32 qui supporte les barres 2 dans une disposition inclinée transversalement, par exemple à 30°, de façon que les barres aient tendance à rouler sur lui en direction du guide 4. De préférence, une tôle de sécurité 33 s'étendant sous l'ensemble du magasin 30, est placée entre les consoles 31 et les rails inférieurs 32 des stations 7 et forme une gondole d'entrée 34 facilitant le chargement des barres dans le magasin. Dans chaque station 7, un rail supérieur 36 du magasin 30 est supporté par une console supérieure 37 fixée au support 11. Afin que l'intervalle 38 entre les deux rails 32 et 36 ait une hauteur réglable correspondant à la section des barres 2 utilisées, le rail supérieur 36 comporte une fente 39 inclinée à 45° par rapport au plan défini par les barres et il est fixé à la console 37 au moyen de deux vis 40 engagées dans cette fente. Ainsi, lorsqu'on modifie la hauteur de l'intervalle 38, la distance entre le rail supérieur 36 et le guide 4 varie dans la même mesure, en fonction du diamètre des barres. Cette distance est destinée à laisser passer la première barre du magasin, appelée la barre en attente 2a, quand elle est soulevée entre le rail 36 et le guide 4.

La barre en attente 2a est arrêtée par une surface latérale 41 de la partie inférieure 15 du guide, ou par un autre arrêt pouvant par exemple être solidaire du rail 32. La vis de retenue 26 empêche que la deuxième barre puisse soulever la barre en attente 2a et se mettre à sa place.

Pour charger la barre en attente 2a dans le guide 4, il est prévu dans chaque station 7 un poussoir sélecteur montant 42 situé à côté du rail inférieur 32 du magasin et ayant une face supérieure 43 située juste au-dessous de la barre 2a, ainsi qu'une face extérieure 44 sensiblement perpendiculaire à la face 43 et s'étendant juste au-dessous du point de contact entre la barre 2a et la deuxième barre s'appuyant contre celle-ci. Dans la position fermée du guide 4, la surface 43 se trouve légèrement plus bas que la barre 2a, afin qu'elle ne soulève pas cette barre quand le guide s'entrouvre pour laisser passer le drapeau. Ceci évite aussi qu'elle se colle à la barre en cas d'arrêt prolongé.

Le poussoir 42 constitue l'extrémité avant d'un levier de sélecteur 45, dont l'extrémité arrière est fixée au levier pivotant 20 dans une position longitudinale réglable, grâce à une vis 46 engagée dans une fente longitudinale 47 du levier 45. A côté de l'extrémité arrière 48 du levier sélecteur 45, le levier 20 comporte un orifice 49 dans lequel on peut placer une barre étalon 50 ayant la même section que les barres 2 à usiner, par exemple un morceau d'une de ces barres, afin de régler la position du poussoir 42 en fonction de cette section. On effectue ce réglage en desserrant la vis 46 et en tirant en arrière le bras de sélecteur 45 jusqu'à sa face d'extrémité 48 bute contre la barre étalon 50, puis on resserre la vis 46. Un évidement 51 est ménagé dans la partie inférieure 15 du guide 4, de sorte que le poussoir 42 peut s'y escamoter partiellement.

Le levier pivotant 20 porte en outre un bras de retenue 52 qui s'étend au-dessous de la rigole 18 et dont l'extrémité libre forme une butée 53 qui s'étend dans un évidement 54 de la partie inférieure 15 du guide 4, à côté du canal de guidage 17. La butée 53 se trouve approximativement en face du poussoir sélecteur 42, mais de l'autre côté du canal 17. Une petite distance est ménagée entre son sommet et la partie supérieure 16 du guide afin de laisser passer le drapeau quand le guide est entrouvert. Le bras 52 est fixé sur le levier 20 à l'aide de deux doigts de guidage 54 et d'une vis de serrage 56 qui sont engagés dans un trou oblong du bras pour permettre un réglage longitudinal de la position de la butée 53.

Le fonctionnement de l'embarreur pour introduire la barre en attente 2a dans le canal de guidage 17 se déroule de la manière suivante, une fois que la poussette a été reculée par la chaîne 19 en dehors de la zone du magasin 30 et des stations intermédiaires 7, de sorte que le canal 17 est vide dans cette zone.

Une rotation appropriée de l'arbre à cames 12 soulève le levier 20 et avec lui la partie supérieure 16 du guide, dans une mesure suffisante pour permettre à une barre de passer entre les deux parties 15 et 16 du guide. Ce mouvement fait monter aussi le poussoir sélecteur 42, qui soulève la barre en attente 2a au moins jusqu'au niveau du dessus de la partie inférieure 15 du guide. En même temps, la face frontale 44 du poussoir retient la deuxième barre et les barres suivantes dans le magasin 30. Grâce à l'inclinaison transversale de l'ensemble de chaque station, la barre 2a roule ou glisse par gravité sur les poussoirs 42 et sur la partie inférieure 15 du guide jusqu'au canal 17, où elle est arrêtée par la butée 53. L'arbre à cames 12 effectue alors une rotation supplémentaire qui laisse redescendre dans chaque station 7 le levier 20, abaissant avec lui la partie supérieure 16 du guide, la butée 53 et le poussoir 42. La prochaine barre du magasin 30 vient alors se placer par gravité en position de barre en attente 2a en butant contre la face latérale 41 de la partie inférieure 15 du guide 4, et elle est suivie par les autres barres 2 du magasin 30. L'embarreur fonctionne ensuite de la manière traditionnelle pour saisir la barre à usiner et l'avancer vers la machine-outil.

La description qui précède montre que l'invention permet, au moyen d'une construction particulièrement simple et fiable, d'assurer l'introduction d'une nouvelle barre dans le guide sans utiliser aucun autre organe de commande que les cames 14 destinées à ouvrir le guide. De plus, les moyens de chargement sont réglables aisément pour s'adapter à différentes tailles et formes des barres à usiner. On remarque aussi que le principe de chargement de la barre en attente selon l'invention est aussi réalisable avec d'autres moyens de commande, par exemple si la partie supérieure du guide et les poussoirs montants sont soulevés par des vérins hydrauliques ou pneumatiques.

## Revendications

1. Embarreur (1) pour alimenter une machine-outil en barres de matière à usiner, l'embarreur comportant :
- un guide ouvrant (4) pourvu d'un canal de guidage (17) dans lequel une barre à usiner (2) peut avancer en direction de la machine-outil,
- un magasin d'alimentation par gravité (30), disposé latéralement par rapport au guide et agencé pour contenir une réserve de barres (2) dont l'une est une barre en attente (2a) retenue par au moins un arrêt (41) à proximité du guide,
- des moyens de chargement (42, 45) agencés pour amener la barre en attente du magasin au canal de guidage en retenant les autres barres (2) en réserve dans le magasin,
- des moyens de commande (12, 14) agencés pour actionner le guide et les moyens de chargement,
caractérisé en ce que les moyens de chargement comportent une rangée de poussoirs sélecteurs montants (42) disposés entre le magasin (30) et le guide (42) et actionnés par les moyens de commande (12, 14), chacun de ces poussoirs ayant une face supérieure (43) disposée au-dessous de la barre en attente et agencée pour soulever celle-ci pour la faire passer par-dessus l'arrêt lorsque les poussoirs sont actionnés.

2. Embarreur selon la revendication 1, caractérisé en ce que le guide comprend une partie inférieure (15) et une partie supérieure mobile (16) entre lesquelles est ménagé le canal de guidage (17), la partie supérieure étant liée à des bras supérieurs (20a) actionnés par les moyens de commande pour ouvrir le guide, et en ce que chaque poussoir sélecteur (42) est solidaire d'un des bras supérieurs.

3. Embarreur selon la revendication 2, caractérisé en ce que ledit poussoir (42) s'étend partiellement dans un évidement (51) de la partie inférieure du guide.

4. Embarreur selon la revendication 2, caractérisé en ce que chaque bras supérieur (20a) fait partie d'un levier pivotant (20), ayant un axe de pivotement (21) parallèle au guide et situé à l'opposé du magasin par rapport au guide, et en ce que le poussoir sélecteur (42) solidaire de levier fait partie d'un bras de sélecteur (45) fixé au levier pivotant et s'étendant au-dessous du guide.

5. Embarreur selon les revendications 3 et 4, caractérisé en ce que la position du bras de sélecteur (45) sur ledit levier (20) est réglable sensiblement dans la direction de la surface supérieure (43) du poussoir.

6. Embarreur selon la revendication 5, caractérisé en ce que le levier comporte, en correspondance d'une extrémité arrière (48) du bras de sélecteur, un orifice (49) destiné à recevoir une barre étalon (50) de même section que les barres à usiner, la position dudit bras étant réglée par mise en butée de ladite extrémité contre la barre étalon.

7. Embarreur selon l'une des revendications 4 à 6, caractérisé en ce que les moyens de chargement comportent, en regard d'au moins un des poussoirs sélecteurs (42), un bras de retenue (52) fixé audit levier (20) et comportant une butée (53) disposée dans un évidement (54) de la partie inférieure du guide, de sorte que ladite butée se place sur côté opposé dudit canal (17) par rapport au poussoir (42) lorsque le poussoir est levé, pour retenir la barre amenée dans le canal.

8. Embarreur selon l'une des revendications 4 à 7, caractérisé en ce que lesdits moyens de commande comportent un arbre à cames (12) disposé parallèlement au guide (4) et pourvu de cames (14) agencées pour soulever chacune l'un des leviers pivotants (20).
